# EUROPEAN PATENT SPECIFICATION

(11) **EP 4 236 471 B1**
(45) Date of publication and mention of the grant of the patent: **01.10.2025**
(21) Application number: 21883349.9
(22) Date of filing: 22.10.2021
(51) Int. Cl.: H04W 40/22, H04W 40/12, H04W 76/14, H04W 36/32, H04W 36/08, H04W 92/18, H04W 4/40, H04W 36/00, H04W 88/04

(54) **METHOD AND APPARATUS FOR PERFORMING MOBILITY IN WIRELESS COMMUNICATION SYSTEM**
VERFAHREN UND VORRICHTUNG ZUR DURCHFÜHRUNG VON MOBILITÄT IN EINEM DRAHTLOSKOMMUNIKATIONSSYSTEM
PROCÉDÉ ET APPAREIL POUR IMPLÉMENTER LA MOBILITÉ DANS UN SYSTÈME DE COMMUNICATION SANS FIL

(30) Priority: 22.10.2020 US 202063104495 P; 08.11.2020 US 202063111074 P
(43) Date of publication of application: 30.08.2023
(73) Proprietor: LG ELECTRONICS, INC., Seoul 07336 (KR)
(72) Inventor: BACK, Seoyoung, Seoul 06772 (KR); PARK, Giwon, Seoul 06772 (KR); LEE, Seungmin, Seoul 06772 (KR); HONG, Jongwoo, Seoul 06772 (KR)
(74) Representative: Plasseraud IP
(86) International application number: PCT/KR2021/014936
(87) International publication number: WO 2022/086282

(56) References cited:
- EP-A1- 3 618 391
- EP-B1- 3 477 996
- WO-A1-2017/052569
- KR-A- 20180 080 272
- KR-A- 20200 088 209
- US-A1- 2019 159 011
- "3rd Generation Partnership Project; Technical Specification Group Services and System Aspects; Study on Architecture Enhancements to ProSe UE-to-Network Relay (Release 15)", 30 August 2017 (2017-08-30), XP051334840, Retrieved from the Internet <URL:http://www.3gpp.org/ftp/tsg_sa/WG2_Arch/Latest_SA2_Specs/Latest_draft_S2_Specs/> [retrieved on 20170830]

## Description

### TECHNICAL FIELD

The present disclosure relates to mobility in wireless communications.

### BACKGROUND

A wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency (SC-FDMA) system. There is a division multiple access (MC-FDMA) system and a multi carrier frequency division multiple access (MC-FDMA) system.

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic.

Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

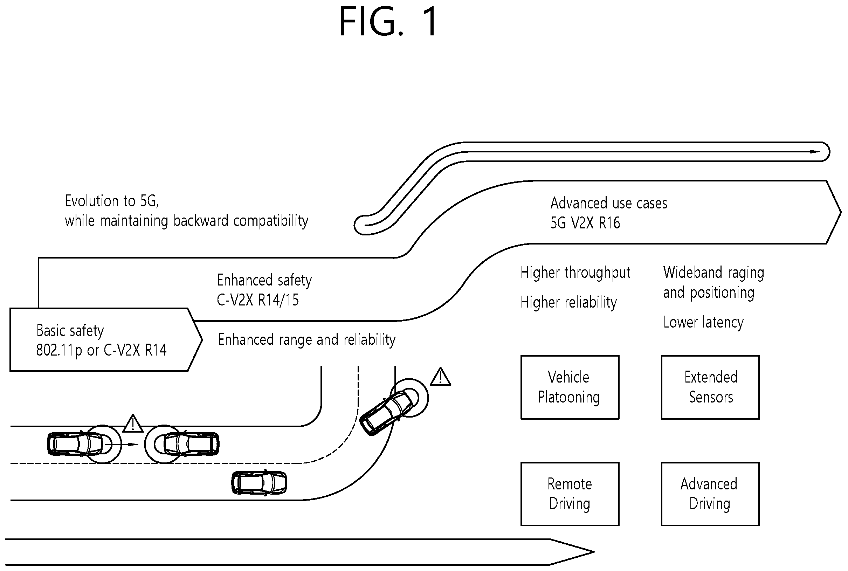

FIG. 1 is a drawing for describing V2X communication based on NR, compared to V2X communication based on RAT used before NR.

Regarding V2X communication, a scheme of providing a safety service, based on a V2X message such as Basic Safety Message (BSM), Cooperative Awareness Message (CAM), and Decentralized Environmental Notification Message (DENM) is focused in the discussion on the RAT used before the NR. The V2X message may include position information, dynamic information, attribute information, or the like. For example, a UE may transmit a periodic message type CAM and/or an event triggered message type DENM to another UE.

For example, the CAM may include basic vehicle information such as vehicle dynamic state information such as direction and speed, vehicle static data such as dimensions, external lighting conditions, and route details. For example, the UE may broadcast CAM, and the latency of CAM may be less than 100 ms. For example, when an unexpected situation such as a vehicle breakdown or an accident occurs, a UE may generate a DENM and transmit it to another UE. For example, all vehicles within the transmission range of the UE can receive CAM and/or DENM. In this case, DENM may have a higher priority than CAM.

Thereafter, regarding V2X communication, various V2X scenarios are proposed in NR. For example, the various V2X scenarios may include vehicle platooning, advanced driving, extended sensors, remote driving, or the like.

For example, based on vehicle platooning, vehicles can dynamically form groups and move together. For example, to perform platoon operations based on vehicle platooning, vehicles belonging to the group may receive periodic data from the lead vehicle. For example, vehicles belonging to the group may shorten or widen the distance between vehicles using periodic data.

For example, based on enhanced driving, vehicles can be semi-automated or fully automated. For example, each vehicle may adjust trajectories or maneuvers based on data obtained from local sensors of proximate vehicles and/or proximate logical entities. Also, for example, each vehicle may mutually share driving intention with nearby vehicles.

For example, based on extended sensors, raw data or processed data obtained through local sensors, or live video data may be used for vehicles, logical entities, UEs of pedestrians, and / or may be interchanged between V2X application servers. Thus, for example, a vehicle can recognize an environment that is more advanced than an environment that can be sensed using its own sensors.

For example, based on remote driving, for a person who cannot drive or a remote vehicle located in a dangerous environment, a remote driver or V2X application may operate or control the remote vehicle. For example, when a route can be predicted, such as in public transportation, cloud computing-based driving may be used to operate or control the remote vehicle. Also, for example, access to a cloud-based back-end service platform can be considered for remote driving.

Meanwhile, ways to specify service requirements for various V2X scenarios, such as vehicle platooning, enhanced driving, extended sensors, and remote driving, are being discussed in NR-based V2X communication.

In a wireless communication system, a UE may perform mobility to a target cell when cell quality of a serving cell deteriorates. When performing mobility to the target cell, the UE may perform mobility directly to the target cell, or may perform mobility to another UE (i.e., relay UE) belonging to the target cell. This relay UE may be selected by a UE performing mobility or may be selected by a base station.

The Technical Report 3GPP TR 23.733, v1.2.0, of August 2017 studies architecture enhancements to ProSe UE-to-network relay.

EP 3 477 996 A1 discusses instantaneous measurement by a terminal device of the signal quality of a PC5 communication link and a Uu communication link when performing communication with a network device or D2D communication.

### SUMMARY

The present disclosure provides a method, an apparatus and a computer-readable medium for mobility in a wireless communication system.

The present disclosure provides a method, an apparatus and a computer-readable medium for performing mobility from a remote UE to a relay UE in a wireless communication system.

The invention is set out in the appended claims.

According to various embodiments of the present disclosure, the subject selecting a relay UE for mobility can be efficiently determined according to circumstances, and a mobility procedure to the relay UE can be optimized.

### BRIEF DESCRIPTION OF THE DRAWINGS

FIG. 1 is a drawing for describing V2X communication based on NR, compared to V2X communication based on RAT used before NR.
FIG. 2 shows a structure of an NR system. The embodiment of FIG. 2 may be combined with various embodiments of the present disclosure.
FIG. 3 shows a radio protocol architecture.
FIG. 4 shows a structure of a radio frame of an NR.
FIG. 5 shows a structure of a slot of an NR frame.
FIG. 6 shows an example of a BWP.
FIG. 7 shows a procedure of performing V2X or SL communication by a UE based on a transmission mode.
FIG. 8 shows an indirect mobility procedure.
FIG. 9 illustrates an example of a procedure for selecting a relay UE.
FIG. 10 shows an example of a method performed by a wireless device.
FIG. 11 shows an example of a method performed by a base station.
FIG. 12 shows an example of a procedure for a remote UE to directly select a relay UE.
FIG. 13 shows an example of a procedure for a base station to select a relay UE.
FIG. 14 shows an example of a procedure for selecting a relay UE by a remote UE and a base station together.
FIG. 15 shows a communication system.
FIG. 16 shows wireless wireless devices.
FIG. 17 shows a signal process circuit for a transmission signal.
FIG. 18 shows another example of a wireless device.
FIG. 19 shows a hand-held device.
FIG. 20 shows a vehicle or an autonomous vehicle.

### DETAILED DESCRIPTION

In the present specification, "A or B" may mean "only A", "only B" or "both A and B." In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

A technical feature described individually in one figure in the present specification may be individually implemented, or may be simultaneously implemented.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

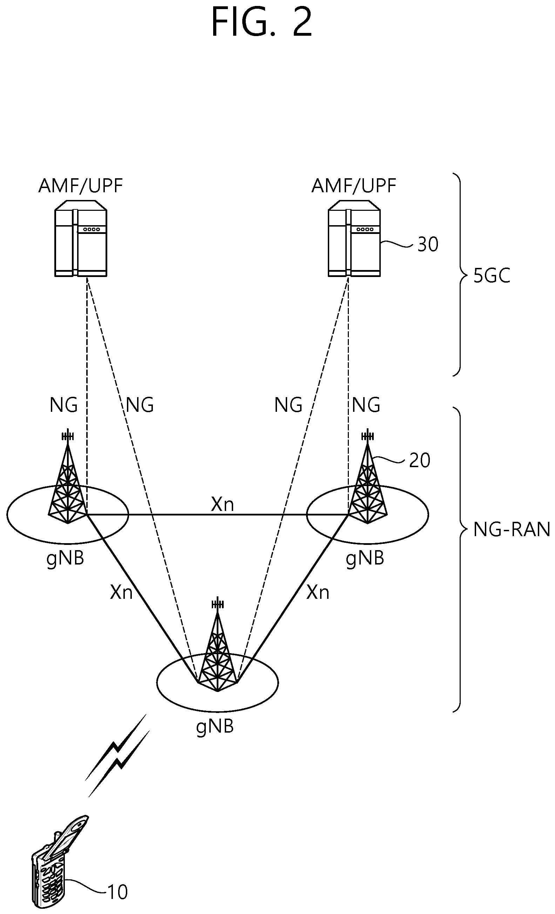

FIG. 2 shows a structure of an NR system, in accordance with an embodiment of the present disclosure. The embodiment of FIG. 2 may be combined with various embodiments of the present disclosure.

Referring to FIG. 2, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 2 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

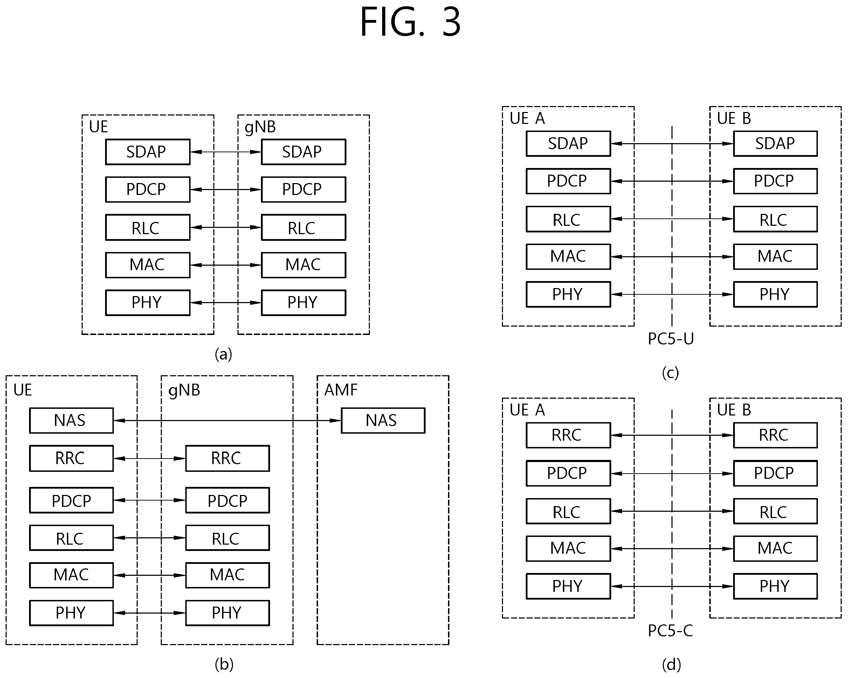

FIG. 3 shows a radio protocol architecture, in accordance with an embodiment of the present disclosure. The embodiment of FIG. 3 may be combined with various embodiments of the present disclosure. Specifically, (a) of FIG. 3 shows a radio protocol stack of a user plane for Uu communication, and (b) of FIG. 3 shows a radio protocol stack of a control plane for Uu communication. (c) of FIG. 3 shows a radio protocol stack of a user plane for SL communication, and (d) of FIG. 3 shows a radio protocol stack of a control plane for SL communication.

Referring to FIG. 3, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

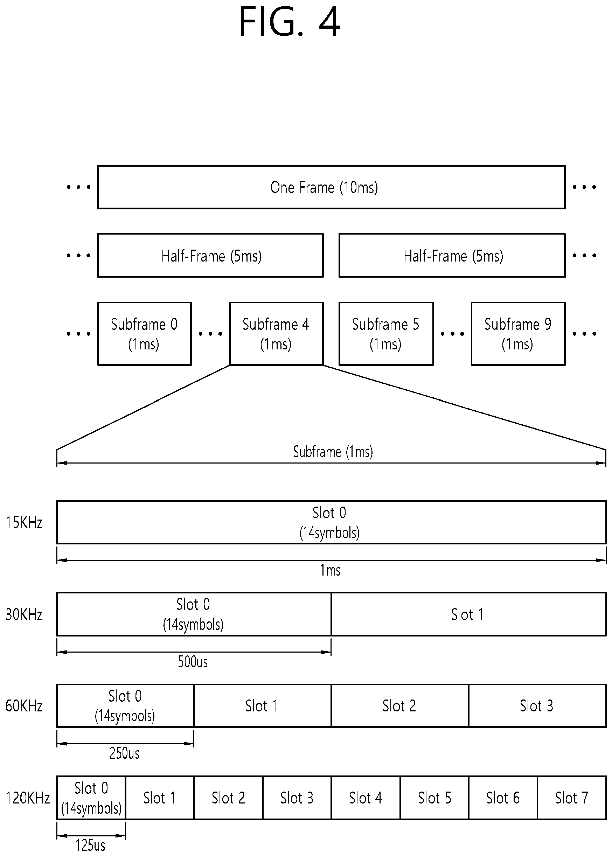

FIG. 4 shows a structure of a radio frame of an NR, in accordance with an embodiment of the present disclosure.

Referring to FIG. 4, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined in accordance with subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) in accordance with an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe in accordance with the SCS, in a case where an extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells. In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

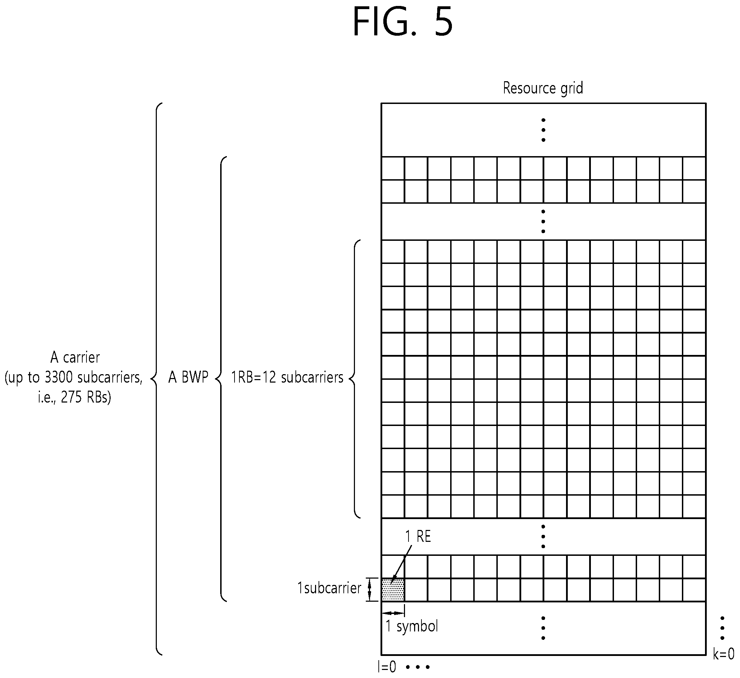

FIG. 5 shows a structure of a slot of an NR frame, in accordance with an embodiment of the present disclosure. Referring to FIG. 5, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Meanwhile, a radio interface between a UE and a UE or a radio interface between a UE and a network may be comprise a first layer, an L2 layer, and an L3 layer. In various embodiments of the present disclosure, layer 1 may mean a physical layer. Also, for example, the L2 layer may mean at least one of a MAC layer, an RLC layer, a PDCP layer, or an SDAP layer. Also, for example, the L3 layer may mean an RRC layer.

Hereinafter, V2X or SL communication will be described.

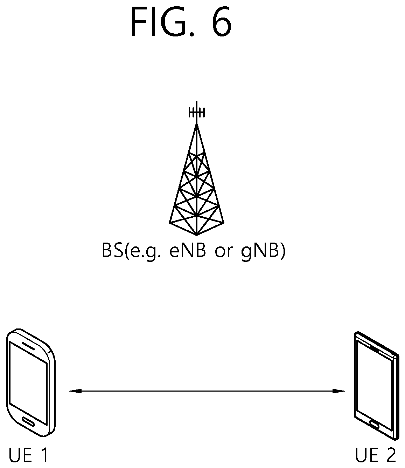

FIG. 6 shows a UE performing V2X or SL communication, in accordance with an embodiment of the present disclosure. The embodiment of FIG. 6 may be combined with various embodiments of the present disclosure.

Referring to FIG. 6, in V2X or SL communication, the term 'UE' may generally imply a UE of a user. However, if a network equipment such as a BS transmits/receives a signal according to a communication scheme between UEs, the BS may also be regarded as a sort of the UE. For example, a UE 1 may be a first apparatus 100, and a UE 2 may be a second apparatus 200.

For example, the UE 1 may select a resource unit corresponding to a specific resource in a resource pool which implies a set of series of resources. In addition, the UE 1 may transmit an SL signal by using the resource unit. For example, a resource pool in which the UE 1 is capable of transmitting a signal may be configured to the UE 2 which is a receiving UE, and the signal of the UE 1 may be detected in the resource pool.

Herein, if the UE 1 is within a connectivity range of the BS, the BS may inform the UE 1 of the resource pool. Otherwise, if the UE 1 is out of the connectivity range of the BS, another UE may inform the UE 1 of the resource pool, or the UE 1 may use a pre-configured resource pool.

In general, the resource pool may be configured in unit of a plurality of resources, and each UE may select a unit of one or a plurality of resources to use it in SL signal transmission thereof.

Resource pools can be subdivided into several types. For example, according to the content of the SL signal transmitted in each resource pool, the resource pool may be classified as follows.
(1) Scheduling Assignment (SA) may be a signal comprising information such as a location of the resource used by the transmitting UE for transmission of the SL data channel, MCS (Modulation and Coding Scheme) required for demodulation of data channels or MIMO (Multiple Input Multiple Output) transmission scheme, TA (Timing Advance). SA can also be multiplexed and transmitted together with SL data on the same resource unit. In this case, the SA resource pool may mean a resource pool in which SA is multiplexed with SL data and transmitted. SA may also be referred to as an SL control channel.
(2) SL data channel (Physical Sidelink Shared Channel, PSSCH) may be a resource pool used by a transmitting UE to transmit user data. If SA is multiplexed and transmitted together with SL data on the same resource unit, only the SL data channel in a form excluding SA information can be transmitted in the resource pool for the SL data channel. In other words, Resource Elements (REs) used to transmit SA information on separate resource units in the SA resource pool may still be used to transmit SL data in the resource pool of the SL data channel. For example, the transmitting UE may transmit the PSSCH by mapping it to consecutive PRBs.
(3) A discovery channel may be a resource pool for a transmitting UE to transmit information such as its own ID. Through this, the transmitting UE can allow neighbor UEs to discover themselves.

Even when the contents of the SL signals described above are the same, different resource pools may be used according to transmission/reception properties of the SL signals. For example, even for the same SL data channel or discovery message, depending on a method for determining the transmission timing of the SL signal (e.g., whether it is transmitted at the reception time of the synchronization reference signal or transmitted by applying a certain timing advance at the reception time), resource allocation method (e.g., whether the base station assigns separate signal transmission resources to separate transmission UEs or whether separate transmission UEs select separate signal transmission resources within the resource pool), signal format (e.g., the number of symbols occupied by each SL signal in one subframe, or the number of subframes used for transmission of one SL signal), signal strength from a base station, transmit power strength of an SL UE, etc., resource pools may be divided into different resource pools.

UE 2 may perform indirect communication with the base station through UE 1. Such indirect communication may be performed through an access link (or Uu link) between UE 1 and the base station and a sidelink between UE 1 and UE 2. UE 1 may relay signal transmission between the base station and UE 2. In this case, UE 1 may be referred to as a relay UE, and UE 2 may be referred to as a remote UE. When UE 2 performs indirect communication with a base station through UE 1, the connection between UE 2 and the base station may be referred to as an indirect connection.

For example, the remote UE may be within the connection range (in-coverage) of the base station. In this case, the remote UE may be within the connection range of the same base station as the relay UE or may be within the connection range of different base station.

As another example, the remote UE may be outside the connection range of the base station (out-of-coverage).

On the other hand, UE 2 may perform direct communication with the base station without relaying of UE 1. Such direct communication may be performed through an access link (or Uu link) between UE 2 and the base station. When the UE 2 performs direct communication with the base station, the connection between the UE 2 and the base station may be referred to as a direct connection.

For synchronization between UE 1 and UE 2, one UE may transmit a Sidelink Synchronization Signal (SLSS) to another UE. The SLSS may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

Meanwhile, in the NR SL system, a plurality of numerologies having different SCS and/or CP lengths may be supported. In this case, as the SCS increases, the length of time resources through which the transmitting UE transmits the S-SSB may be shortened. Accordingly, coverage of the S-SSB may decrease. Therefore, in order to guarantee coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, an S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two or four S-SSBs to the receiving UE within one S-SSB transmission period.

For example, when the SCS is 60 kHz in FR2, the transmitting UE can transmit 1, 2, 4, 8, 16 or 32 S-SSBs to the receiving UE within one S-SSB transmission period. there is. For example, if the SCS is 120 kHz in FR2, the transmitting UE may transmit 1, 2, 4, 8, 16, 32 or 64 S-SSBs to the receiving UE within one S-SSB transmission period.

Meanwhile, when the SCS is 60 kHz, two types of CPs may be supported. In addition, the structure of the S-SSB transmitted from the transmitting UE to the receiving UE may be different according to the CP type. For example, the CP type may be Normal CP (NCP) or Extended CP (ECP). Specifically, for example, when the CP type is NCP, the number of symbols mapped to the PSBCH in the S-SSB transmitted by the transmitting UE may be 9 or 8. On the other hand, for example, when the CP type is ECP, the number of symbols mapped to the PSBCH in the S-SSB transmitted by the transmitting UE may be 7 or 6. For example, a PSBCH may be mapped to a first symbol in an S-SSB transmitted by a transmitting UE. For example, a receiving UE receiving the S-SSB may perform an automatic gain control (AGC) operation in the first symbol interval of the S-SSB.

Hereinafter, resource allocation in SL will be described.

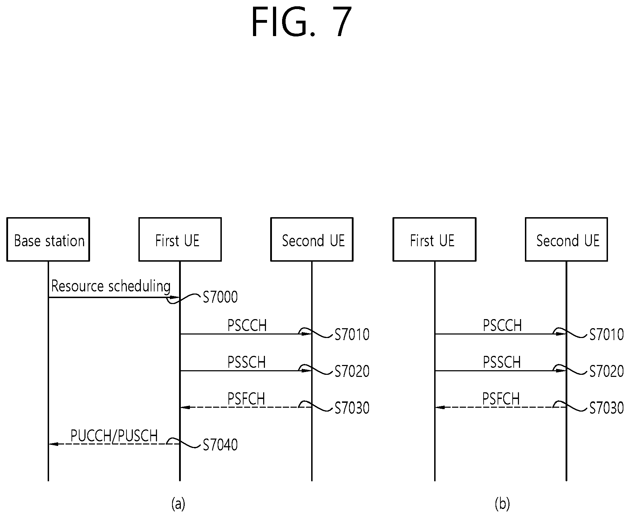

FIG. 7 shows a procedure of performing V2X or SL communication by a UE based on a transmission mode, in accordance with an embodiment of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 7 shows a UE operation related to an LTE transmission mode 1 or an LTE transmission mode 3. Alternatively, for example, (a) of FIG. 7 shows a UE operation related to an NR resource allocation mode 1. For example, the LTE transmission mode 1 may be applied to general SL communication, and the LTE transmission mode 3 may be applied to V2X communication.

For example, (b) of FIG. 7 shows a UE operation related to an LTE transmission mode 2 or an LTE transmission mode 4. Alternatively, for example, (b) of FIG. 7 shows a UE operation related to an NR resource allocation mode 2.

Referring to (a) of FIG. 7, in the LTE transmission mode 1, the LTE transmission mode 3, or the NR resource allocation mode 1, a BS may schedule an SL resource to be used by the UE for SL transmission. For example, the base station may perform resource scheduling to UE 1 through PDCCH (more specifically, downlink control information (DCI)), and UE 1 may perform V2X or SL communication with UE 2 according to the resource scheduling. For example, UE 1 may transmit sidelink control information (SCI) to UE 2 through physical sidelink control channel (PSCCH), and then transmit data based on the SCI to UE 2 through physical sidelink shared channel (PSSCH).

For example, in NR resource allocation mode 1, a UE may be provided or allocated with resources for one or more SL transmissions of one transport block (TB) from a base station through a dynamic grant. For example, the base station may provide resources for transmission of the PSCCH and/or PSSCH to the UE using the dynamic grant. For example, the transmitting UE may report SL hybrid automatic repeat request (HARQ) feedback received from the receiving UE to the base station. In this case, PUCCH resources and timing for reporting SL HARQ feedback to the base station may be determined based on an indication in the PDCCH for the base station to allocate resources for SL transmission.

For example, DCI may indicate a slot offset between DCI reception and the first SL transmission scheduled by DCI. For example, the minimum gap between the DCI scheduling the SL transmission resource and the first scheduled SL transmission resource may not be smaller than the processing time of the corresponding UE.

For example, in NR resource allocation mode 1, a UE may be periodically provided or allocated with a resource set from a base station for a plurality of SL transmissions through a configured grant. For example, the configured grant may include configured grant type 1 or configured grant type 2. For example, the UE may determine a TB to transmit in each occasion indicated by the given configured grant.

For example, the base station may allocate SL resources to the UE on the same carrier, and may allocate SL resources to the UE on different carriers.

For example, the NR base station can control LTE-based SL communication. For example, the NR base station may transmit NR DCI to the UE to schedule LTE SL resources. In this case, for example, a new RNTI for scrambling the NR DCI may be defined. For example, the UE may include an NR SL module and an LTE SL module.

For example, after the UE including the NR SL module and the LTE SL module receives the NR SL DCI from the gNB, the NR SL module may convert the NR SL DCI into LTE DCI type 5A, and the NR SL module may transmit LTE DCI type 5A to the LTE SL module in units of X ms. For example, after the LTE SL module receives LTE DCI format 5A from the NR SL module, the LTE SL module may apply activation and/or release to the first LTE subframe after Z ms. For example, the X may be dynamically indicated using a DCI field. For example, the minimum value of X may be different according to UE capability. For example, a UE may report a single value according to UE capabilities. For example, the X may be a positive number.

Referring to (b) of FIG. 7, in the LTE transmission mode 2, the LTE transmission mode 4, or the NR resource allocation mode 2, the UE may determine an SL transmission resource within an SL resource configured by a BS/network or a pre-configured SL resource. For example, the configured SL resource or the pre-configured SL resource may be a resource pool. For example, the UE may autonomously select or schedule a resource for SL transmission. For example, the UE may perform SL communication by autonomously selecting a resource within a configured resource pool. For example, the UE may autonomously select a resource within a selective window by performing a sensing and resource (re)selection procedure. For example, the sensing may be performed in unit of subchannels. In addition, UE 1, which has selected a resource within the resource pool, transmits SCI to UE 2 through PSCCH, and then transmits data based on the SCI to UE 2 through PSSCH.

For example, a UE can assist selecting SL resources for other UEs. For example, in NR resource allocation mode 2, the UE may receive a configured grant for SL transmission. For example, in NR resource allocation mode 2, a UE may schedule SL transmission of another UE. For example, in NR resource allocation mode 2, the UE may reserve SL resources for blind retransmission.

For example, in NR resource allocation mode 2, a first UE may indicate the priority of SL transmission to a second UE using SCI. For example, the second UE may decode the SCI, and the second UE may perform sensing and/or resource (re)selection based on the priority. For example, the resource (re)selection procedure may include identifying a candidate resource in a resource selection window by a second UE and selecting a resource for (re)transmission from among the identified candidate resources. For example, the resource selection window may be a time interval in which the UE selects a resource for SL transmission. For example, after the second UE triggers resource (re)selection, the resource selection window may start at T1 ≥ 0, and the resource selection window may be limited by a remaining packet delay budget of the second UE. For example, in the step of identifying a candidate resource in the resource selection window by the second UE, a specific resource is indicated by the SCI received by the second UE from the first UE, and 1 SL RSRP measurement value for the specific resource exceeds the SL RSRP threshold, the second UE may not determine the specific resource as a candidate resource. For example, the SL RSRP threshold may be determined based on the priority of SL transmission indicated by the SCI received by the second UE from the first UE and the priority of the SL transmission on a resource selected by the second UE.

For example, the 1 SL RSRP may be measured based on SL Demodulation Reference Signal (DMRS). For example, one or more PSSCH DMRS patterns may be configured or previously configured in the time domain for each resource pool. For example, PDSCH DMRS configuration type 1 and/or type 2 may be identical to or similar to the frequency domain pattern of PSSCH DMRS. For example, the exact DMRS pattern may be indicated by SCI. For example, in NR resource allocation mode 2, the transmitting UE may select a specific DMRS pattern from DMRS patterns configured or previously configured for a resource pool.

For example, in NR resource allocation mode 2, based on the sensing and resource (re)selection procedures, the transmitting UE may perform initial transmission of a transport block (TB) without reservation. For example, based on the sensing and resource (re)selection procedure, the transmitting UE may reserve SL resources for initial transmission of the second TB using the SCI associated with the first TB.

For example, in NR resource allocation mode 2, the UE may reserve resources for feedback-based PSSCH retransmission through signalling related to previous transmission of the same transport block (TB). For example, the maximum number of SL resources reserved by one transmission including the current transmission may be 2, 3 or 4. For example, the maximum number of SL resources may be the same regardless of whether HARQ feedback is enabled. For example, the maximum number of HARQ (re)transmissions for one TB may be limited by configuration or preconfiguration. For example, the maximum number of HARQ (re)transmissions may be up to 32. For example, if there is no configuration or preconfiguration, the maximum number of HARQ (re)transmissions may not be specified. For example, the configuration or preconfiguration may be for a transmission UE. For example, in NR resource allocation mode 2, HARQ feedback for releasing resources not used by the UE may be supported.

For example, in NR resource allocation mode 2, a UE may use SCI to indicate one or more subchannels and/or slots used by the UE to other UEs. For example, a UE may indicate to another UE one or more subchannels and/or slots reserved by the UE for PSSCH (re)transmission using SCI. For example, a minimum allocation unit of SL resources may be a slot. For example, the size of a subchannel may be configured or preconfigured for a UE.

Hereinafter, a sidelink control information (SCI) will be described.

Control information transmitted by a BS to a UE through a PDCCH may be referred to as downlink control information (DCI), whereas control information transmitted by the UE to another UE through a PSCCH may be referred to as SCI. For example, the UE may know in advance a start symbol of the PSCCH and/or the number of symbols of the PSCCH, before decoding the PSCCH. For example, the SCI may include SL scheduling information. For example, the UE may transmit at least one SCI to another UE to schedule the PSSCH. For example, one or more SCI formats may be defined.

For example, a transmitting UE may transmit the SCI to a receiving UE on the PSCCH. The receiving UE may decode one SCI to receive the PSSCH from the transmitting UE.

For example, the transmitting UE may transmit two consecutive SCIs (e.g., 2-stage SCI) to the receiving UE on the PSCCH and/or the PSSCH. The receiving UE may decode the two consecutive SCIs (e.g., 2-stage SCI) to receive the PSSCH from the transmitting UE. For example, if SCI configuration fields are divided into two groups in consideration of a (relatively) high SCI payload size, an SCI including a first SCI configuration field group may be referred to as a first SCI or a 1st SCI, and an SCI including a second SCI configuration field group may be referred to as a second SCI or a 2nd SCI. For example, the transmitting UE may transmit the first SCI to the receiving UE through the PSCCH. For example, the transmitting UE may transmit the second SCI to the receiving UE on the PSCCH and/or the PSSCH. For example, the second SCI may be transmitted to the receiving UE through an (independent) PSCCH, or may be transmitted in a piggyback manner together with data through the PSSCH. For example, two consecutive SCIs may also be applied to different transmissions (e.g., unicast, broadcast, or groupcast).

For example, the transmitting UE may transmit the entirety or part of information described below to the receiving UE through the SCI. Herein, for example, the transmitting UE may transmit the entirety or part of the information described below to the receiving UE through the first SCI and/or the second SCI.
- PSSCH and/or PSCCH related resource allocation information, e.g., the number/positions of time/frequency resources, resource reservation information (e.g., period), and/or
- SL CSI report request indicator or SL (1) RSRP (and/or SL (1) RSRQ and/or SL (L1) RSSI) report request indicator, and/or
- SL CSI transmission indicator (or SL (1) RSRP (and/or SL (1) RSRQ and/or SL (L1) RSSI) information transmission indicator)) (on PSSCH), and/or
- MCS information, and/or
- Transmit power information, and/or
- 1 destination ID information and/or 1 source ID information, and/or
- SL HARQ process ID information, and/or
- New data indicator (NDI) information, and/or
- Redundancy version (RV) information, and/or
- (Transmission traffic/packet related) QoS information, e.g., priority information, and/or
- SL CSI-RS transmission indicator or information on the number of (to-be-transmitted) SL CSI-RS antenna ports,
- Location information of a transmitting UE or location (or distance region) information of a target receiving UE (for which SL HARQ feedback is requested), and/or
- Reference signal (e.g., DMRS, etc.) related to channel estimation and/or decoding of data to be transmitted through a PSSCH, e.g., information related to a pattern of a (time-frequency) mapping resource of DMRS, rank information, antenna port index information

For example, the first SCI may include information related to channel sensing. For example, the receiving UE may decode the second SCI by using a PSSCH DMRS. A polar code used in a PDCCH may be applied to the second SCI. For example, in a resource pool, a payload size of the first SCI may be identical for unicast, groupcast, and broadcast. After decoding the first SCI, the receiving UE does not have to perform blind decoding of the second SCI. For example, the first SCI may include scheduling information of the second SCI.

Meanwhile, in various embodiments of the present disclosure, since the transmitting UE may transmit at least one of the SCI, the first SCI, and/or the second SCI to the receiving UE through the PSCCH, the PSCCH may be replaced / substituted with at least one of the SCI, the first SCI, and/or the second SCI. And/or, for example, the SCI may be replaced/substituted with at least one of the PSCCH, the first SCI, and/or the second SCI. And/or, for example, since the transmitting UE may transmit the second SCI to the receiving UE through the PSSCH, the PSSCH may be replaced/substituted with the second SCI.

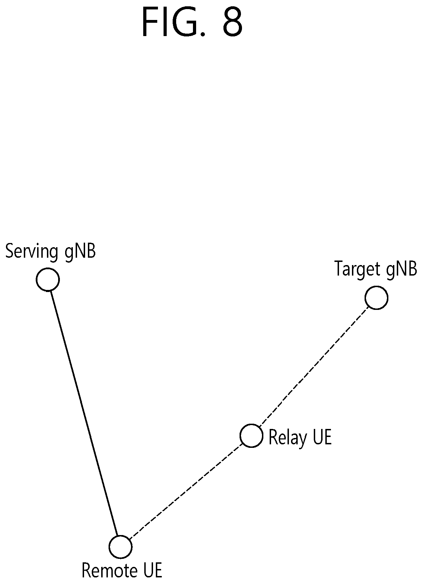

FIG. 8 shows an indirect mobility procedure according to an embodiment of the present disclosure. In the present disclosure, mobility may include at least one of primary cell (PCell) handover (or simply handover (HO)), primary secondary cell (PSCell) addition, or PSCell change. In addition, the embodiments described for the case of handover in this disclosure may also be applied to the case of mobility.

Referring to FIG. 8, indirect handover may occur in a layer 2-relay operation. In the indirect handover procedure, the remote UE may establish an indirect connection to the target gNB through the relay UE while establishing a direct connection with the serving gNB.

For example, the remote UE may directly select a relay UE for indirect handover. In this case, the remote UE may select one relay UE from among several relay UEs satisfying condition(s) of the AS-layer and/or higher layer. Selection of such a relay UE may depend on the implementation of the UE.

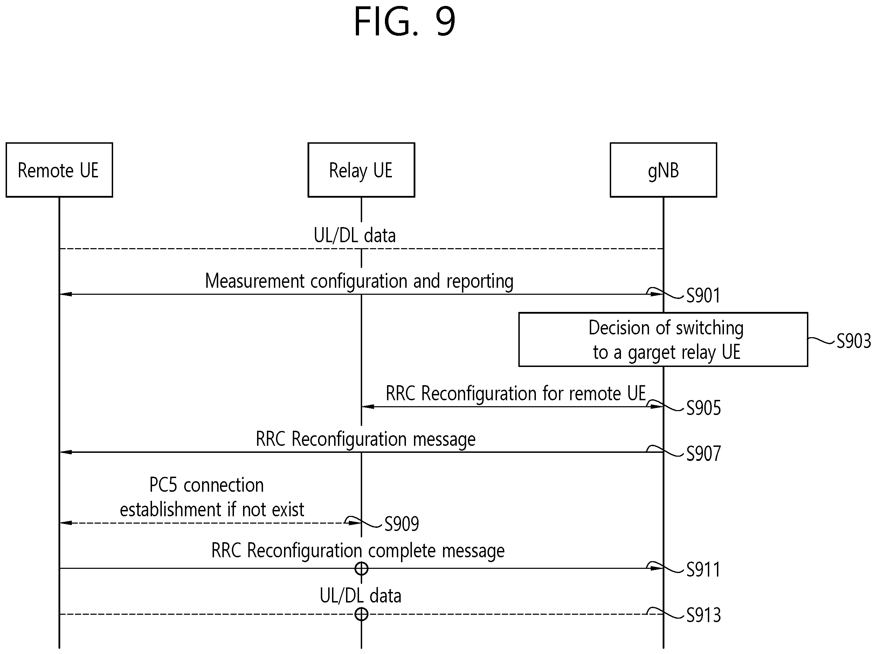

As another example, the base station may select a relay UE for indirect handover. When the remote UE performs handover from direct connection to indirect connection (i.e., indirect handover), the remote UE may report the ID/SL-RSRP information of the candidate relay UE to the serving gNB of the remote UE, and to the target relay UE. Whether to switch can be determined by the serving gNB. That is, when service continuity is considered, the remote UE may report information on neighboring candidate relay UEs to the base station, and the base station may select an appropriate relay UE from among candidate relay UEs based on the reported information. If handover is required after the base station selects the relay UE, the base station may also determine handover. An example of a procedure for the base station to select a relay UE for indirect handover is illustrated in FIG. 9 .

FIG. 9 illustrates an example of a procedure for selecting a relay UE according to an embodiment of the present disclosure.

Referring to FIG. 9, in step S901, after the remote UE discovers and/or measures candidate relay UE(s), the remote UE may report one or more candidate relay UE(s). When reporting, the remote UE may filter appropriate relay UE(s) that satisfy the condition(s) of the upper layer. Information reported by the remote UE may include relay UE ID and/or SL RSRP information.

In step S903, the gNB may select a target relay UE and determine switching to the target relay UE.

In step S905, the gNB may perform RRC reconfiguration on the relay UE for handover of the remote UE to the relay UE. Step S905 is an optional step and may be omitted.

In step S907, the gNB may transmit an RRC reconfiguration message to the remote UE. The RRC reconfiguration message may include an ID of a target relay UE and/or target configuration for handover to the target relay UE.

In step S909, if the PC5 connection has not been established between the remote UE and the target relay UE, the remote UE may establish a PC5 connection with the target relay UE.

In step S911, the remote UE may feed back an RRC reconfiguration complete message to the gNB through the target path using the target configuration provided in the RRC reconfiguration message.

At step S913, data path switching may occur.

As described above, a relay UE for indirect handover may be directly selected by a remote UE or selected by a base station. Hereinafter, it will be described in which case the remote UE directly selects the relay UE, and in which case the base station selects the relay UE. Furthermore, a procedure for a remote UE to directly select a relay UE, a procedure for a base station to select a relay UE, and a procedure for a remote UE and a base station to select a relay UE together are described.

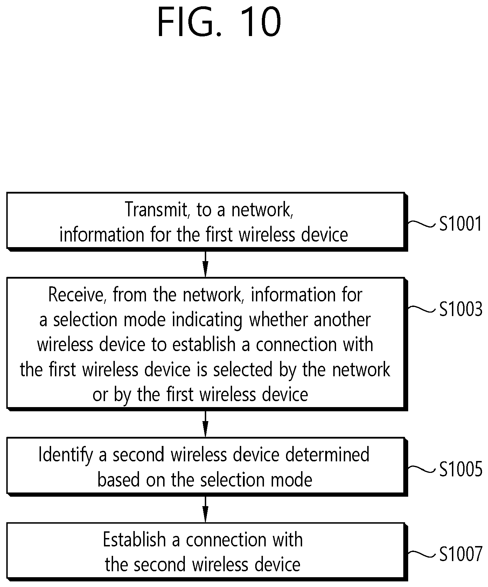

FIG. 10 shows an example of a method performed by a wireless device according to an embodiment of the present disclosure. The steps illustrated in FIG. 10 may also be performed by the UE.

Referring to FIG. 10, in step S1001, a first wireless device may transmit, to a network, information for the first wireless device.

In step S1003, after transmitting the information for the first wireless device to the network, the first wireless device may receive, from the network, information for a selection mode indicating whether another wireless device to establish a connection with the first wireless device is selected by the network or by the first wireless device.

In step S1005, the first wireless device may identify a second wireless device determined based on the selection mode.

In step S1007, the first wireless device may establish a connection with the second wireless device.

According to various embodiments, the information for the first wireless device may comprise at least one of information indicating whether the first wireless device is a low-power device or information for a remaining battery level of the first wireless device.

According to various embodiments, the selection mode may indicate that another wireless device to establish a connection with the first wireless device is selected by the first wireless device. The first wireless device may select the second wireless device based on the selection mode.

According to various embodiments, the information for the selection mode indicating that another wireless device to establish a connection with the first wireless device is selected by the first wireless device may correspond to a configuration not to report measurement results for sidelink.

According to various embodiments, the first wireless device may measure a sidelink signal strength. The first wireless device may identify one or more candidate wireless devices for which measured sidelink signal strength is higher than a configured threshold. The first wireless device may select the second wireless device from among the one or more wireless devices.

According to various embodiments, the first wireless device may transmit a mobility request message to a serving cell for the first wireless device when a serving cell for the second wireless device is different from a serving cell for the first wireless device. The mobility request message may comprise at least one of an identifier of the second wireless device or a cell identifier of the serving cell for the second wireless device. The serving cell for the second wireless device may be a target cell for mobility.

According to various embodiments, the first wireless device may receive a mobility failure message from a serving cell for the first wireless device in response to the mobility request message. The first wireless device may release the connection with the second wireless device. The first wireless device may establish a connection with a third wireless device.

According to various embodiments, the first wireless device may receive a mobility command for mobility to the target cell from the serving cell for the first wireless device in response to the mobility request message. The first wireless device may apply a target cell configuration included in the mobility command. After applying the target cell configuration, the first wireless device may transmit a mobility complete message to the target cell through the second wireless device.

According to various embodiments, the selection mode may indicate that another wireless device to establish a connection with the first wireless device is selected by the network. The first wireless device may receive a mobility command comprising an identifier of the second wireless device from the network.

According to various embodiments, the information for the selection mode indicating that another wireless device to establish a connection with the first wireless device is selected by the network may correspond to a configuration not to report measurement results for sidelink.

According to various embodiments, the first wireless device may measure a sidelink signal strength. The first wireless may identify one or more candidate wireless devices for which measured sidelink signal strength is higher than a configured threshold. The first wireless device may transmit information for a list of the one or more candidate wireless devices and a sidelink signal strength for the one or more candidate wireless devices to the network. The second wireless device may be selected by the network based on the sidelink signal strength from the list of the one or more candidate wireless devices.

According to various embodiments, the first wireless device may receive a plurality of mobility commands including the mobility command, each of the plurality of mobility commands being associated with a corresponding wireless device. The first wireless device may select the second wireless device from among a plurality of wireless devices related to the plurality of mobility commands.

According to various embodiments, a memory of the first wireless device may store a software code implementing instructions that, when executed by a processor for the first wireless device, perform operations comprising: transmitting, to a network, information for the first wireless device; after transmitting the information for the first wireless device to the network, receiving, from the network, information for a selection mode indicating whether another wireless device to establish a connection with the first wireless device is selected by the network or by the first wireless device; identifying a second wireless device determined based on the selection mode; and establishing a connection with the second wireless device.

According to various embodiments, a non-transitory computer readable medium (CRM) may have stored a plurality of instructions that, when executed by a processor for a first wireless device, cause the first wireless device to: transmit, to a network, information for the first wireless device; after transmitting the information for the first wireless device to the network, receive, from the network, information for a selection mode indicating whether another wireless device to establish a connection with the first wireless device is selected by the network or by the first wireless device; identify a second wireless device determined based on the selection mode; and establish a connection with the second wireless device.

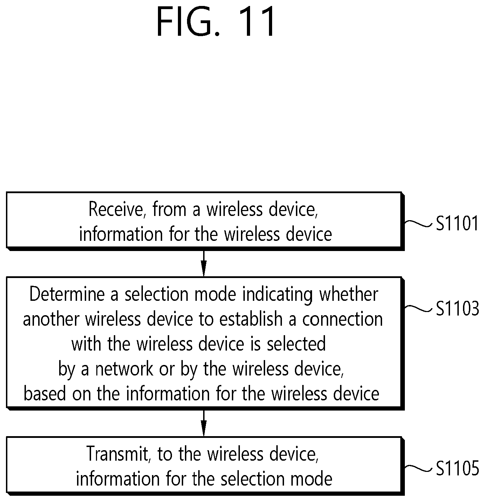

FIG. 11 shows an example of a method performed by a base station according to an embodiment of the present disclosure.

Referring to FIG. 11, in step S1101, the base station may receive, from a wireless device, information for the wireless device.

In step S1103, the base station may determine a selection mode indicating whether another wireless device to establish a connection with the wireless device is selected by a network or by the wireless device, based on the information for the wireless device.

In step S1105, the base station may transmit, to the wireless device, information for the selection mode.

### 1. Method for determining whether a remote UE directly selects a relay UE or a base station selects a relay UE

When the remote UE is not in a connected state (i.e., in an IDLE or INACTIVE state), the remote UE may select a relay UE by itself according to preconfigured criteria.

When the remote UE is in a connected state, the remote UE may transmit information for the remote UE to the base station. For example, information for the remote UE may be transmitted through a *SidelinkUEInformation* message. Information for the remote UE may include information indicating whether the remote UE is a power saving UE and/or information for remaining battery/power of the remote UE. The base station may notify whether the remote UE directly selects the relay UE or whether the base station selects the relay UE for the remote UE through RRC (re)configuration.

When the remote UE selects the relay UE by itself, the remote UE does not need to report the sidelink signal strength (e.g., SL-RSRP) and/or ID of the candidate relay UE to the base station, so power consumption of the remote UE can be reduced. Furthermore, when the remote UE itself selects the relay UE, there may be an advantage in terms of latency.

On the other hand, when the base station selects the relay UE for the remote UE, the remote UE needs to periodically/aperiodically report the candidate relay UE ID and/or the sidelink signal strength to the base station, so power consumption for reporting may occur. There may be disadvantages in terms of delay. However, since the base station can select a relay UE, an optimized operation is possible in terms of the entire network.

For example, the RRC (re)configuration information transmitted by the base station to the remote UE is information for notifying/instructing the remote UE to select a relay UE by itself (e.g., 'relay selection enable' and/or information for the selection mode).

The remote UE receiving the RRC (re)configuration message in which 'activation of relay selection' is 'configured/indicated' can select a relay UE by itself. When the selected relay UE belongs to a cell different from that of the remote UE, the remote UE may transmit a handover request message to the gNB. At this time, the remote UE may transmit the ID of the selected relay UE and/or the cell ID to which the selected relay UE belongs.

As another example, the base station may implicitly inform the remote UE that the remote UE can or should select the relay UE by itself. For example, if a configuration not to report sidelink signal strength (SL-RSRP) measurement is included in the RRC (re)configuration message instead of the 'relay selection activation' signal, the remote UE implicitly determines that the remote UE can select the relay UE, and may select the relay UE itself.

A remote UE receiving an RRC (re)configuration in which 'activation of relay selection' is not 'configured/indicated' may determine that the base station selects the relay UE. The remote UE may report the sidelink signal strength of the candidate relay UE and/or the ID of the candidate relay UE to the base station according to a period configured by the base station. Alternatively, when relay (re)selection is triggered, the remote UE may be configured to report the sidelink signal strength of the candidate relay UE and/or the ID of the candidate relay UE according to a period configured by the base station from then on.

As another example, when the RRC (re)configuration message instead of the 'relay selection activation' signal comprises a configuration to measure the sidelink signal strength (SL-RSRP) of the candidate relay UE and report the sidelink signal strength (SL-RSRP) of the candidate relay UE together with the ID of the candidate relay UE, the remote UE implicitly determines that the gNB selects the relay UE instead, and may not select the relay UE itself. In other words, in the case where the base station implicitly informs the remote UE that the remote UE can or should select a relay UE by itself, when the RRC (re)configuration message comprises a configuration to measure the sidelink signal strength (SL-RSRP) of the candidate relay UE and report the sidelink signal strength (SL-RSRP) of the candidate relay UE together with the ID of the candidate relay UE, the remote UE implicitly determines that the gNB selects the relay UE instead, and may not select the relay UE itself.

### 2. A method for a remote UE to directly select a relay UE

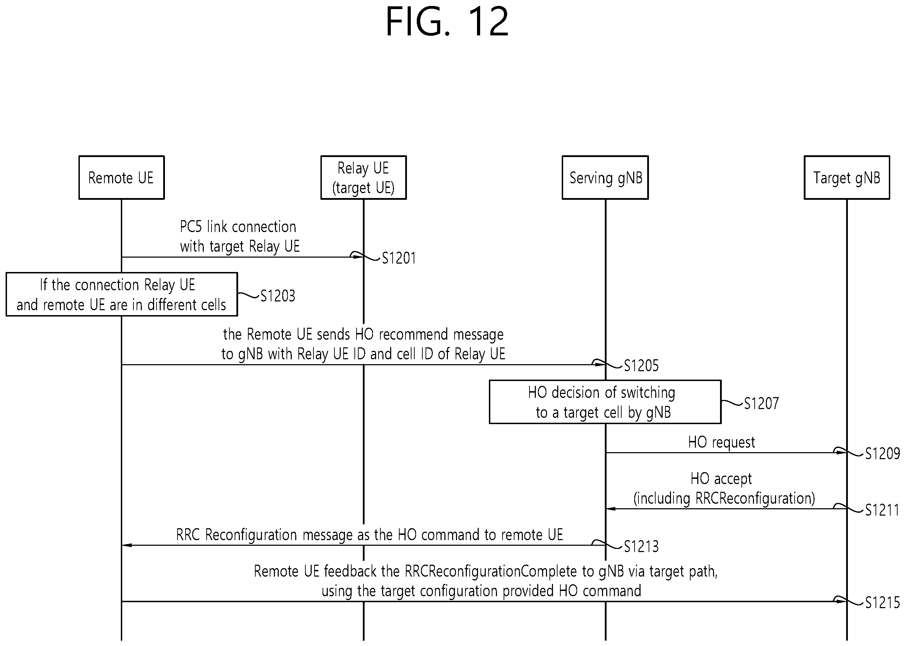

When the remote UE selects the relay UE, the remote UE may select the relay UE to establish a PC5 connection before receiving the handover command. An operation in which the remote UE directly selects the relay UE is described with reference to FIG. 12.

FIG. 12 shows an example of a procedure for a remote UE to directly select a relay UE according to an embodiment of the present disclosure.

Referring to FIG. 12, in step S1201, the remote UE may measure the sidelink signal strength and select a relay UE to establish a connection with the remote UE from among candidate relay UEs having a measured signal strength higher than a (pre)configured threshold. The remote UE may establish a PC5 connection with the selected relay UE.

In step S1203, if the serving cell of the relay UE with which the remote UE establishes the PC5 connection is different from the serving cell of the remote UE, handover may be requested for the remote UE, and the remote UE can determine to handover to the target gNB. The target gNB may correspond to the serving cell of the relay UE.

In step S1205, the remote UE may transmit a handover recommendation message to the gNB. The handover recommendation message may include at least one of an ID of a relay UE that has established a PC5 connection with the remote UE or an ID of a serving cell of the relay UE (a cell on which the relay UE camps when the relay UE is in an idle state). The remote UE that sent the handover recommendation message can stop performing measurements.

In step S1207, the gNB may determine handover to the target gNB. Then, in step S1209, the gNB may transmit a handover request message to the target gNB, and in step S1211, the gNB may receive a handover acknowledgment message from the target gNB. The handover acknowledgment message may include RRC reconfiguration for handover to the target gNB.

If the gNB rejects handover, or if the gNB sends a handover request message to the target gNB but does not receive a handover acknowledgment message from the target gNB, at least one of the following operations may be performed:
- The gNB may notify the remote UE that the handover to the serving cell/camping cell of the relay UE with which the remote UE has established a PC5 connection has failed.
- Upon receiving the handover failure signal, the remote UE may notify the relay UE selected by the remote UE that PC5 connection/link is released due to handover failure. Accordingly, the selected relay UE may release the PC5 link established for operation with the remote UE.
- Upon receiving the handover failure signal, the remote UE may release the PC5 connection with the relay UE selected by the remote UE.
- The remote UE may perform a re-establishment procedure to remove handover-related information received from the serving gNB.
- The remote UE performs relay reselection to establish a PC5 connection with another relay UE, and if the serving cell of the corresponding relay UE is different from that of the remote UE, the remote UE may perform step S1205.

In step S1213, if handover is acknowledged by the target gNB, the serving gNB may transmit an RRC reconfiguration message received from the target gNB to the remote UE for handover to the target gNB.

In step S1215, the remote UE may transmit an RRC reconfiguration complete message to the target gNB through the relay UE, and handover may be completed.

### 3. Method for base station to select relay UE

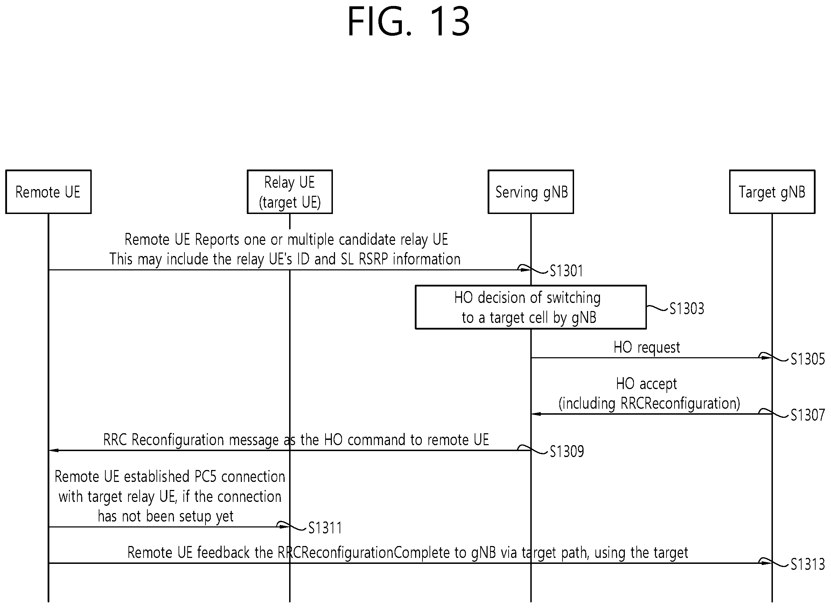

If the serving gNB selects the relay UE, the remote UE may receive the handover command and establish a PC5 connection with the relay UE. An operation in which the serving gNB selects a relay UE is described in FIG. 13.

FIG. 13 shows an example of a procedure for a base station to select a relay UE according to an embodiment of the present disclosure.

Referring to FIG. 13, in step S1301, the remote UE may transmit a list of candidate relay UEs having a sidelink signal strength greater than or equal to a (pre)configured threshold to the gNB. In this case, the sidelink signal strength and cell ID information of the candidate relay UE may be delivered together.

In step S1303, the serving gNB of the remote UE may select a relay UE from among candidate relay UEs based on the information received in step S1301. If the cell ID of the selected relay UE is different from that of the remote UE, the serving gNB may determine handover to the target gNB. The target gNB may correspond to the cell ID of the selected relay UE.

In step S1305, the serving gNB may transmit a handover request message to the target gNB.

In step S1307, the serving gNB may receive a handover acknowledgment message from the target gNB. The handover acknowledgment message may include RRC reconfiguration for handover to the target gNB.

In step S1309, the serving gNB may transmit an RRC reconfiguration message to the remote UE as a handover command. The RRC reconfiguration message may include the ID of the relay UE selected by the gNB.

In step S1311, the remote UE may establish a PC5 connection with the relay UE. However, the remote UE may be rejected from establishing a PC5 connection with the relay UE due to reasons such as admission control of the relay UE. In this case, the remote UE may perform at least one of the following operations:
- The remote UE may inform the serving cell of the remote UE that handover cannot be performed due to reasons such as access control of the relay UE.
- The remote UE may report (measurement and report) information of neighboring candidate relay UEs together with the sidelink signal strength to the gNB. This information may include information notifying that handover cannot be performed due to reasons such as the relay UE's access control (admission control). In addition, the remote UE may measure the signal strength of another cell and report the measurement result to the gNB.
- Since the remote UE cannot perform handover, it can stop the handover timer (e.g., T304 timer) and perform a re-establishment procedure to remove the handover information received from the serving gNB.
- After receiving the handover command (or RRC reconfiguration message), the remote UE may start a handover timer (e.g., T304 timer). The handover timer may be used to perform an operation such as random access to a target cell for handover. However, the handover timer may operate differently when the remote UE establishes a PC5 connection with the target relay UE or when the remote UE fails to establish a PC5 connection with the target relay UE.

For example, when the remote UE establishes a PC5 connection with the target relay UE, since the remote UE does not perform random access, the handover timer may be ignored.

As another example, if the remote UE fails to establish a PC5 connection with the target relay UE while the handover timer or similar timer is running, the handover timer or similar timer may be reset/stopped.

As another example, a timer value of a handover timer or a similar timer may be set to a value greater than the legacy value by further considering an operating time for the remote UE to search for a new candidate relay UE.

As another example, when the remote UE establishes a PC5 connection with the relay UE or fails to establish the connection, and the handover timer or similar timer expires, the relay UE (re)selection operation may continue.

In step S1313, the remote UE may transmit an RRC reconfiguration complete message to the target gNB through the relay UE.

### 4. Method for Remote UE and Base Station to Select Relay UE Together

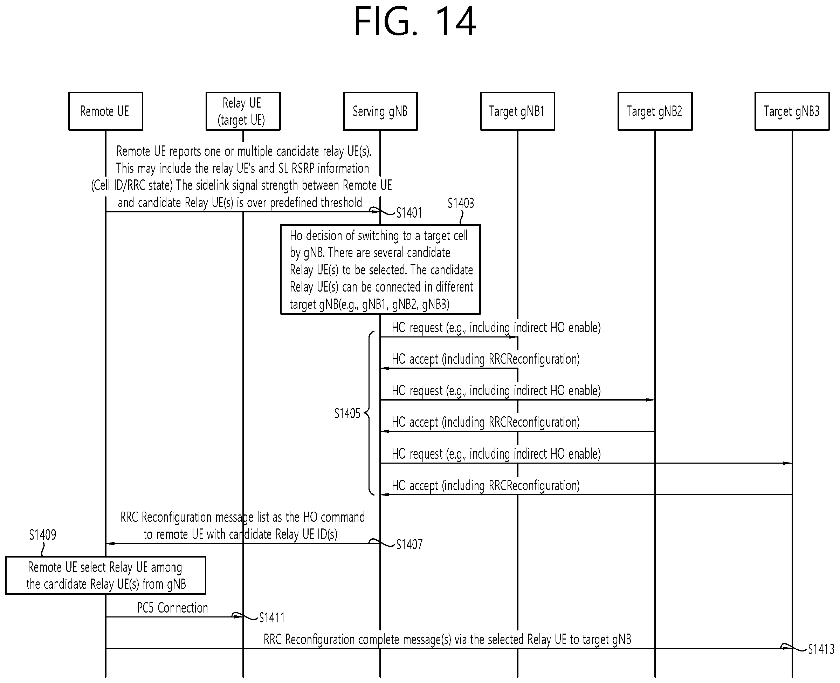

FIG. 14 shows an example of a procedure for selecting a relay UE by a remote UE and a base station together according to an embodiment of the present disclosure.

Referring to FIG. 14, in step S1401, the remote UE may transmit information for a list of candidate relay UEs searched by the remote UE to the serving gNB. In this case, a cell ID of a cell to which the candidate relay UE belongs and/or information for an RRC state of the candidate relay UE may be delivered together.

In step S1403, the serving gNB may determine that handover is required for the remote UE to establish a PC5 connection with the candidate relay UE.

In step S1405, the serving gNB may transmit a handover request message to gNBs to which the candidate relay UE is connected (or the candidate relay UE is camping-on). When several candidate relay UEs exist, each candidate relay UE is connected to or camps on a corresponding gNB among different gNBs, so the serving gNB must transmit a handover request message to the corresponding gNB. Here, the handover request message may include an indicator notifying that the remote UE will establish a connection with a relay UE belonging to a corresponding gNB for handover (i.e., an indicator indicating activation of indirect handover).

The serving gNB may receive a handover acknowledgment message from the gNB which each candidate relay UE is in a connected state for or camps-on.

In step S1407, In step S1407, the serving gNB can transmit, to a remote UE, an RRC (re)configuration message including a list of RRC (re)configurations included in the handover acknowledgment message received from the gNB in which each candidate relay UE is in a connected or camped-on state. Each RRC (re)configuration in the RRC reconfiguration message and/or list may include the ID of the candidate relay UE. Candidate relay UE IDs may be arranged according to priority in the RRC (re)configuration message.

In step S1409, the remote UE may select a relay UE from the received RRC (re)configuration list. The remote UE may select one relay UE from among handover-capable candidate relay UEs identified in the RRC (re)configuration message received from the gNB.

In step S1411, the remote UE can establish a PC5 connection with the selected relay UE. At this time, if the remote UE fails to establish a PC5 connection with the selected relay UE due to reasons such as access control of the relay UE, the remote UE selects another relay UE from the received RRC (re)configuration list (and/or selects another relay UE from among handover-capable candidate relay UEs identified in the RRC (re)configuration message), and attempts PC5 connection establishment the selected other relay UE. Step S1411 may be configured to be performed until the handover timer expires.

In step S1413, the remote UE may transmit an RRC (re)configuration complete message to the target gNB through the selected relay UE.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

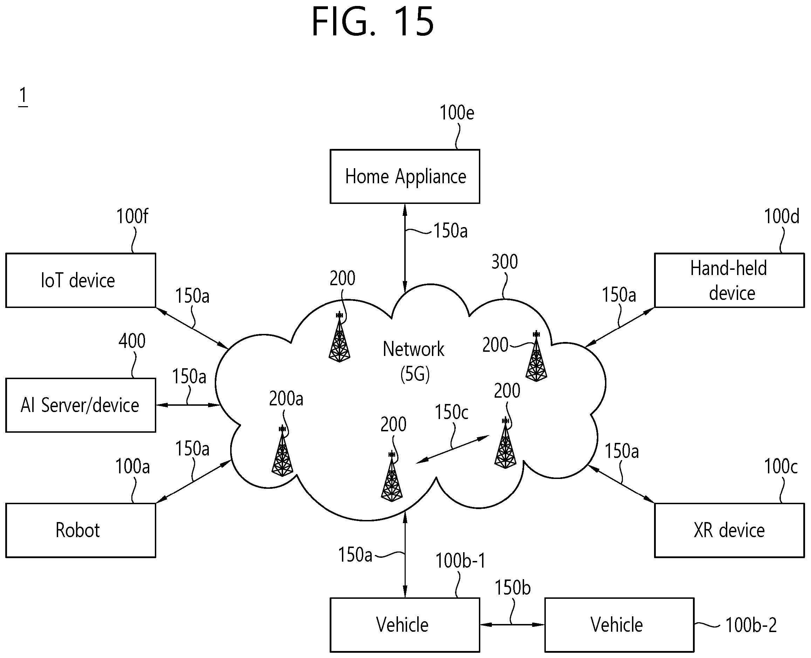

FIG. 15 shows a communication system 1, in accordance with an embodiment of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

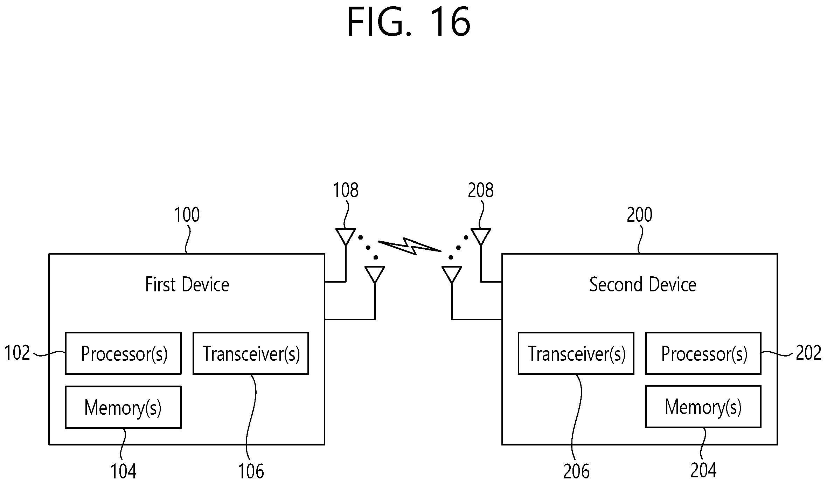

FIG. 16 shows wireless devices, in accordance with an embodiment of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

According to an embodiment of the present disclosure, the first wireless device 100 and/or one or more processors 102 may be configured to implement operations performed by the wireless device/UE in the present disclosure. For example, one or more processors 102 may be configured to control one or more transceivers 106 to transmit, to a network, information for the first wireless device. After transmitting the information for the first wireless device to the network. The one or more processors 102 may be configured to control one or more transceivers 106 to receive, from the network, information for a selection mode indicating whether another wireless device to establish a connection with the first wireless device is selected by the network or by the first wireless device. The one or more processors 102 may be configured to identify a second wireless device determined based on the selection mode. The one or more processors 102 may be configured to establish a connection with the second wireless device.

According to an embodiment of the present disclosure, the second wireless device 200 and/or one or more processors 202 may be configured to implement operations performed by the base station in the present disclosure. For example, one or more processors 202 may be configured to control one or more transceivers 206 to receive, from a wireless device, information for the wireless device. one or more processors 202 may be configured to determine a selection mode indicating whether another wireless device to establish a connection with the wireless device is selected by a network or by the wireless device, based on the information for the wireless device. one or more processors 202 may be configured to control the transceiver 206 to transmit, to the wireless device, information for the selection mode.

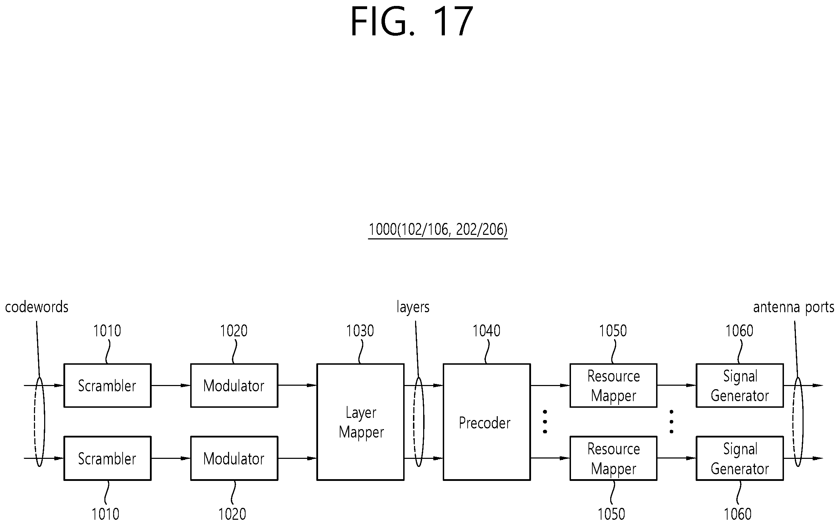

FIG. 17 shows a signal process circuit for a transmission signal, in accordance with an embodiment of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

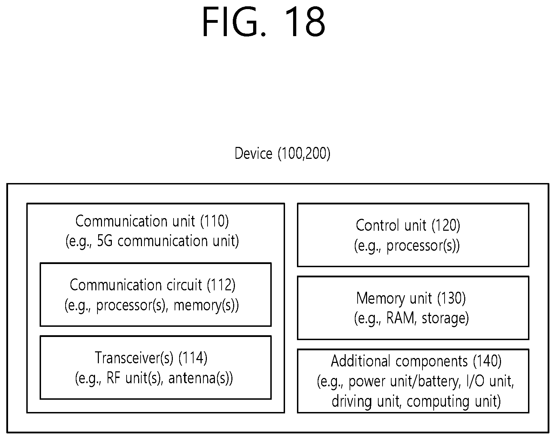

FIG. 18 shows another example of a wireless device, in accordance with an embodiment of the present disclosure. The wireless device may be implemented in various forms according to a use-case/service (refer to FIG. 15).

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast UE, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

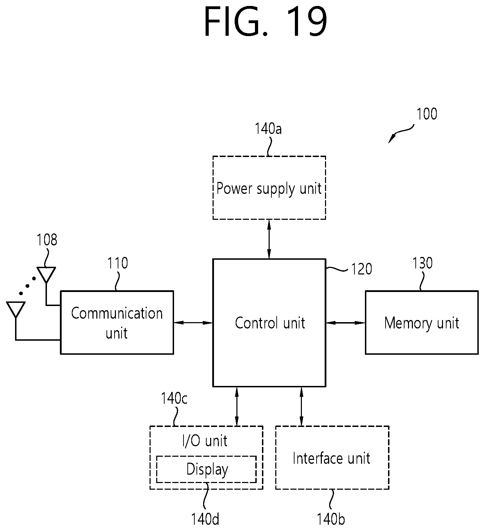

FIG. 19 shows a hand-held device, in accordance with an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user TERMINAL (UT), a Mobile Subscriber Station (MSS), a Subscriber Station (SS), an Advanced Mobile Station (AMS), or a Wireless UE (WT).

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

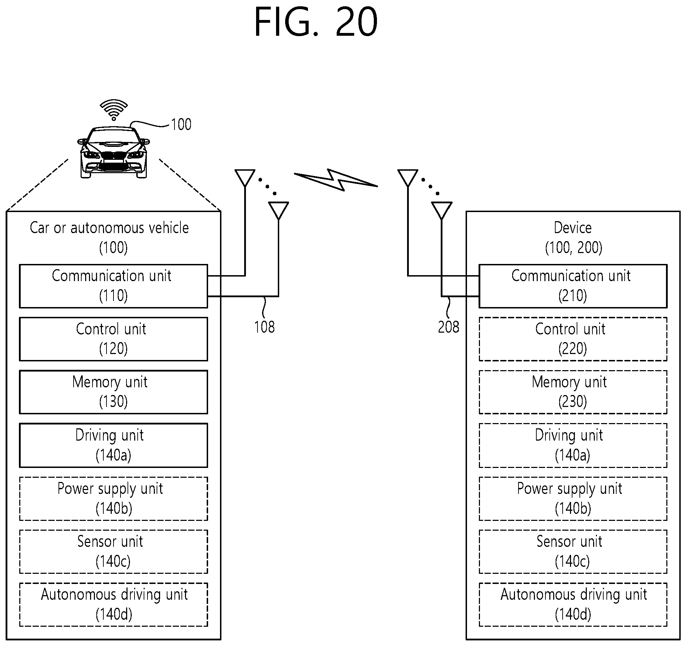

FIG. 20 shows a vehicle or an autonomous vehicle, in accordance with an embodiment of the present disclosure. The vehicle or autonomous vehicle may be implemented by a mobile robot, a car, a train, a manned/unmanned Aerial Vehicle (AV), a ship, etc.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

According to various embodiments of the present disclosure, the subject selecting a relay UE for mobility can be efficiently determined according to circumstances, and a mobility procedure to the relay UE can be optimized.

## Claims

1. A method performed by a remote user equipment, UE, for a UE-to-network relay in a wireless communication system, the method comprising:
establishing a direct connection between a network (300) and the remote UE (100);
receiving, from the network (300), a radio resource control, RRC, reconfiguration message for switching from the direct connection to an indirect connection, wherein the RRC reconfiguration message comprises an identity, ID, of a relay UE for the UE-to-network relay;
after receiving the RRC reconfiguration message comprising the ID of the relay UE, starting a timer and triggering a PC5 connection establishment with the relay UE informed by the ID; and
performing a relay UE selection, or reselection,
wherein the relay UE selection or reselection continues to be performed following a failure of the PC5 connection establishment and based on an expiry of the timer.

2. The method of claim 1, wherein a value of the timer is larger than a value of a timer for a random access to the network (300).

3. The method of claim 1, wherein a value of the timer is set based on a time duration for the remote UE (100) to search for the relay UE.

4. The method of claim 1, wherein a serving cell of the remote UE (100) is same as or different from that of the relay UE.

5. The method of claim 1, wherein the RRC reconfiguration message is related to a mobility command.

6. The method of claim 1, further comprising receiving, from the network (300), information for a selection mode indicating that the relay UE to establish the PC5 connection with the remote UE (100) is selected by the network.

7. The method of claim 6, wherein the information for the selection mode corresponds to a configuration not to report measurement results for sidelink.

8. The method of claim 1, further comprising:
measuring a sidelink signal strength;
identifying one or more candidate relay UEs for which measured sidelink signal strength is higher than a configured threshold; and
transmitting information for a list of the one or more candidate relay UEs and a sidelink signal strength for the one or more candidate relay UEs to the network (300),
wherein the relay UE is selected by the network (300) based on the sidelink signal strength from the list of the one or more candidate relay UEs.

9. The method of claim 1, wherein the remote UE (100) communicates with at least one of a network (300), or an autonomous vehicle (100).

10. A remote user equipment, UE, for a UE-to-network relay in a wireless communication system, the remote UE (100) comprising:
a transceiver (106);
at least one processor (102); and
at least one memory (104) operatively coupled to the at least one processor and staring instructions that, based on being executed by the at least one processor (102), perform operations comprising:
establishing a direct connection between a network (300) and the remote UE (100);
receiving, from the network (300), a radio resource control, RRC, reconfiguration message for switching from the direct connection to an indirect connection, wherein the RRC reconfiguration message comprises an identity, ID, of a relay UE for the UE-to-network relay;
after receiving the RRC reconfiguration message comprising the ID of the relay UE, starting a timer and triggering a PC5 connection establishment with the relay UE informed by the ID; and
performing a relay UE selection, or reselection,
wherein the relay UE selection or reselection continues to be performed following a failure of the PC5 connection establishment and based on an expiry of the timer.

11. A non-transitory computer readable medium, CRM, having recorded thereon a program that, based on being executed by at least one processor (102), perform operations that comprise:
establishing a direct connection between a network (300) and a remote UE (100);
receiving, from the network (300), a radio resource control, RRC, reconfiguration message for switching from the direct connection to an indirect connection, wherein the RRC reconfiguration message comprises an identity, ID, of a relay UE for the UE-to-network relay;
after receiving the RRC reconfiguration message comprising the ID of the relay UE, starting a timer and triggering a PC5 connection establishment with the relay UE informed by the ID; and
performing a relay UE selection, or reselection,
wherein the relay UE selection or reselection continues to be performed following a failure of the PC5 connection establishment and based on an expiry of the timer.

## Patentansprüche

1. Verfahren, das von einer entfernten Benutzerausrüstung, UE, für eine UE-to-Network Relay in einem Drahtloskommunikationssystem durchgeführt wird, wobei das Verfahren Folgendes umfasst:
Herstellen einer direkten Verbindung zwischen einem Netzwerk (300) und der entfernten UE (100);
Empfangen, aus dem Netzwerk (300), einer Funkressourcensteuerungs, RRC,-Rekonfigurationsnachricht zum Umschalten von der direkten Verbindung auf eine indirekte Verbindung, wobei die RRC-Rekonfigurationsnachricht eine Identität, ID, einer Relay-UE für die UE-to-Network Relay umfasst;
nach dem Empfangen der RRC-Rekonfigurationsnachricht, die die ID der Relay-UE umfasst, Starten eines Timers und Auslösen eines PC5-Verbindungsaufbaus mit der durch die ID informierten Relay-UE; und
Durchführen einer Relay-UE-Auswahl oder -Neuauswahl,
wobei die Relay-UE-Auswahl oder -Neuauswahl nach einem Fehlschlag des PC5-Verbindungsaufbaus und basierend auf einem Ablauf des Timers weiterhin durchgeführt wird.

2. Verfahren nach Anspruch 1, wobei ein Wert des Timers größer ist als ein Wert eines Timers für einen zufälligen Zugriff auf das Netzwerk (300).

3. Verfahren nach Anspruch 1, wobei ein Wert des Timers basierend auf einer Zeitdauer eingestellt wird, über die die ferngesteuerte UE (100) nach dem Relay-UE sucht.

4. Verfahren nach Anspruch 1, wobei eine bedienende Zelle der entfernten UE (100) dieselbe oder eine andere als die der Relay-UE ist.

5. Verfahren nach Anspruch 1, wobei sich die RRC-Rekonfigurationsnachricht auf einen Mobilitätsbefehl bezieht.

6. Verfahren nach Anspruch 1, ferner umfassend das Empfangen, aus dem Netzwerk (300), von Informationen für einen Auswahlmodus, der angibt, dass die Relay-UE zum Herstellen der PC5-Verbindung mit der entfernten UE (100) vom Netzwerk ausgewählt wird.

7. Verfahren nach Anspruch 6, wobei die Informationen für den Auswahlmodus einer Konfiguration entsprechen, bei der keine Messergebnisse für Sidelink gemeldet werden.

8. Verfahren nach Anspruch 1, das ferner Folgendes umfasst:
Messen einer Sidelink-Signalstärke;
Identifizieren einer oder mehrerer Kandidaten-Relay-UE, für die die gemessene Sidelink-Signalstärke höher als ein konfigurierter Schwellenwert ist; und
Übertragen von Informationen für eine Liste der einen oder mehreren Kandidaten-Relay-UE und einer Sidelink-Signalstärke für die eine oder mehreren Kandidaten-Relay-UE an das Netzwerk (300),
wobei das Relay-UE vom Netzwerk (300) basierend auf der Sidelink-Signalstärke aus der Liste der einen oder mehreren Kandidaten-Relay-UE ausgewählt wird.

9. Verfahren nach Anspruch 1, wobei die entfernte UE (100) mit mindestens einem eines Netzwerks (300) oder eines autonomen Fahrzeugs (100) kommuniziert.

10. Entfernte Benutzerausrüstung, UE, für eine UE-to-Network Relay in einem Drahtloskommunikationssystem, wobei die entfernte UE (100) Folgendes umfasst:
einen Transceiver (106);
mindestens einen Prozessor (102); und
mindestens einen Speicher (104), der betriebsbereit mit dem mindestens einen Prozessor gekoppelt ist und Anweisungen speichert, die basierend darauf, dass sie von dem mindestens einen Prozessor (102) ausgeführt werden, Operationen durchführen, die Folgendes umfassen:
Herstellen einer direkten Verbindung zwischen einem Netzwerk (300) und der entfernten UE (100);
Empfangen, aus dem Netzwerk (300), einer Funkressourcensteuerungs, RRC,-Rekonfigurationsnachricht zum Umschalten von der direkten Verbindung auf eine indirekte Verbindung, wobei die RRC-Rekonfigurationsnachricht eine Identität, ID, einer Relay-UE für die UE-to-Network Relay umfasst;
nach dem Empfangen der RRC-Rekonfigurationsnachricht, die die ID der Relay-UE umfasst, Starten eines Timers und Auslösen eines PC5-Verbindungsaufbaus mit der durch die ID informierten Relay-UE; und
Durchführen einer Relay-UE-Auswahl oder -Neuauswahl,
wobei die Relay-UE-Auswahl oder -Neuauswahl nach einem Fehlschlag des PC5-Verbindungsaufbaus und basierend auf einem Ablauf des Timers weiterhin durchgeführt wird.

11. Nicht flüchtiges, rechnerlesbares Medium, CRM, das darauf ein Programm aufgezeichnet hat, das basierend darauf, dass es von mindestens einem Prozessor (102) ausgeführt wird, Operationen durchführt, die Folgendes umfassen:
Herstellen einer direkten Verbindung zwischen einem Netzwerk (300) und einer entfernten UE (100);
Empfangen, aus dem Netzwerk (300), einer Funkressourcensteuerungs, RRC,-Rekonfigurationsnachricht zum Umschalten von der direkten Verbindung auf eine indirekte Verbindung, wobei die RRC-Rekonfigurationsnachricht eine Identität, ID, einer Relay-UE für die UE-to-Network Relay umfasst;
nach dem Empfangen der RRC-Rekonfigurationsnachricht, die die ID der Relay-UE umfasst, Starten eines Timers und Auslösen eines PC5-Verbindungsaufbaus mit der durch die ID informierten Relay-UE; und
Durchführen einer Relay-UE-Auswahl oder -Neuauswahl,
wobei die Relay-UE-Auswahl oder -Neuauswahl nach einem Fehlschlag des PC5-Verbindungsaufbaus und basierend auf einem Ablauf des Timers weiterhin durchgeführt wird.

## Revendications

1. Procédé réalisé par un équipement utilisateur, UE, distant pour un relais UE-vers-réseau dans un système de communication sans fil, le procédé comprenant :
l'établissement d'une connexion directe entre un réseau (300) et l'UE distant (100) ;
la réception, en provenance du réseau (300), d'un message de reconfiguration de contrôle de ressource radio, RRC, pour une commutation de la connexion directe à une connexion indirecte, dans lequel le message de reconfiguration RRC comprend une identité, ID, d'un UE relais pour le relais UE-vers-réseau ;
après la réception du message de reconfiguration RRC comprenant l'ID de l'UE relais, le démarrage d'un temporisateur et le déclenchement d'un établissement de connexion PC5 avec l'UE relais informé par l'ID ; et
la réalisation d'une sélection ou d'une resélection d'UE relais,
dans lequel la sélection ou la resélection d'UE relais continue d'être réalisée à la suite d'un échec de l'établissement de connexion PC5 et sur la base d'une expiration du temporisateur.

2. Procédé selon la revendication 1, dans lequel une valeur du temporisateur est supérieure à une valeur d'un temporisateur pour un accès aléatoire au réseau (300).

3. Procédé selon la revendication 1, dans lequel une valeur du temporisateur est définie sur la base d'une durée pour que l'UE distant (100) recherche l'UE relais.

4. Procédé selon la revendication 1, dans lequel une cellule de desserte de l'UE distant (100) est identique ou différente de celle de l'UE relais.

5. Procédé selon la revendication 1, dans lequel le message de reconfiguration RRC est relatif à une commande de mobilité.

6. Procédé selon la revendication 1, comprenant en outre la réception, en provenance du réseau (300), d'informations pour un mode de sélection indiquant que l'UE relais pour établir la connexion PC5 avec l'UE distant (100) est sélectionné par le réseau.

7. Procédé selon la revendication 6, dans lequel les informations pour le mode de sélection correspondent à une configuration pour ne pas rapporter des résultats de mesure pour une liaison latérale.

8. Procédé selon la revendication 1, comprenant en outre :
la mesure d'une intensité de signal de liaison latérale ;
l'identification d'un ou de plusieurs UE relais candidats pour lesquels l'intensité de signal de liaison latérale mesurée est supérieure à un seuil configuré ; et
l'émission d'informations pour une liste des un ou plusieurs UE relais candidats et une intensité de signal de liaison latérale pour les un ou plusieurs UE relais candidats vers le réseau (300),
dans lequel l'UE relais est sélectionné par le réseau (300) sur la base de l'intensité de signal de liaison latérale parmi la liste des un ou plusieurs UE relais candidats.

9. Procédé selon la revendication 1, dans lequel l'UE distant (100) communique avec au moins un parmi un réseau (300) ou un véhicule autonome (100).

10. Équipement utilisateur, UE, distant pour un relais UE-vers-réseau dans un système de communication sans fil, l'UE distant (100) comprenant :
un émetteur-récepteur (106) ;
au moins un processeur (102) ; et
au moins une mémoire (104) couplée de manière opérationnelle à l'au moins un processeur et stockant des instructions qui, sur la base du fait qu'elles sont exécutées par l'au moins un processeur (102), réalisent des opérations comprenant :
l'établissement d'une connexion directe entre un réseau (300) et l'UE distant (100) ;
la réception, en provenance du réseau (300), d'un message de reconfiguration de contrôle de ressource radio, RRC, pour une commutation de la connexion directe à une connexion indirecte, dans lequel le message de reconfiguration RRC comprend une identité, ID, d'un UE relais pour le relais UE-vers-réseau ;
après la réception du message de reconfiguration RRC comprenant l'ID de l'UE relais, le démarrage d'un temporisateur et le déclenchement d'un établissement de connexion PC5 avec l'UE relais informé par l'ID ; et
la réalisation d'une sélection ou d'une resélection d'UE relais,
dans lequel la sélection ou la resélection d'UE relais continue d'être réalisée à la suite d'un échec de l'établissement de connexion PC5 et sur la base d'une expiration du temporisateur.

11. Support lisible par ordinateur, CRM, non transitoire, ayant, enregistré sur celui-ci, un programme qui, sur la base du fait qu'il est exécuté par au moins un processeur (102), réalise des opérations qui comprennent :
l'établissement d'une connexion directe entre un réseau (300) et un UE distant (100) ;
la réception, en provenance du réseau (300), d'un message de reconfiguration de contrôle de ressource radio, RRC, pour une commutation de la connexion directe à une connexion indirecte, dans lequel le message de reconfiguration RRC comprend une identité, ID, d'un UE relais pour le relais UE-vers-réseau ;
après la réception du message de reconfiguration RRC comprenant l'ID de l'UE relais, le démarrage d'un temporisateur et le déclenchement d'un établissement de connexion PC5 avec l'UE relais informé par l'ID ; et
la réalisation d'une sélection ou d'une resélection d'UE relais,
dans lequel la sélection ou la resélection d'UE relais continue d'être réalisée à la suite d'un échec de l'établissement de connexion PC5 et sur la base d'une expiration du temporisateur.
